# DEMANDE DE BREVET EUROPEEN

(11) **EP 3 450 406 A1**
(43) Date de publication de la demande: **06.03.2019**
(21) Numéro de dépôt: 18191849.1
(22) Date de dépôt: 30.08.2018
(51) Int. Cl.: C03B 7/086, C03B 7/08, C03B 7/084

(54) **DISPOSITIF DISTRIBUTEUR DE PARAISONS POUR LA FABRICATION D'ARTICLES CREUX EN VERRE PAR SOUFFLAGE**

(30) Priorité: 30.08.2017 FR 1758009
(71) Demandeur: Pochet du Courval, 92110 Clichy (FR)
(72) Inventeur: FOUCARD, Jacky, 76340 CAMPNEUSEVILLE (FR); HAMONT, Gaëtan, 76270 NEUFCHATEL-EN-BRAY (FR); DELDIN, Antoine, 80135 YAUCOURT-BUSSUS (FR)
(74) Mandataire: Lavoix

(57) **Abrégé**

Dispositif (10) distributeur de paraisons (15) destinées à la fabrication d'articles (5) creux en verre par soufflage, le dispositif comprenant :
- une cuvette (32) adaptée pour contenir du verre en fusion (34), la cuvette (32) définissant au moins un orifice de passage (46) pour le verre en fusion,
- une unité (36) de mise en mouvement du verre en fusion comportant une chemise (48) située au-dessus et en regard de l'orifice de passage selon un axe (D) du dispositif, la chemise et la cuvette définissant ensemble une chambre (52) configurée pour recevoir le verre en fusion, l'unité comprenant un organe plongeur (50) situé au moins en partie dans la chambre, et mobile en translation par rapport à la chemise (selon l'axe pour pousser le verre en fusion à travers l'orifice de passage, et
- un organe de coupe (38) pour couper le verre en fusion et former les paraisons.

L'unité (36) comprend en outre au moins un canal d'alimentation ménagé dans l'organe plongeur ou dans la chemise pour apporter une matière colorante (56) directement dans le verre en fusion présent dans la chambre, et le dispositif comprend au moins une source de matière colorante (42) pour alimenter le canal d'alimentation en matière colorante.

## Description

L'invention concerne un dispositif distributeur de paraisons destinées à la fabrication d'articles creux en verre par soufflage, le dispositif comprenant :
- une cuvette adaptée pour contenir du verre en fusion, la cuvette définissant au moins un orifice de passage pour le verre en fusion,
- une unité de mise en mouvement du verre en fusion comportant une chemise située au-dessus et en regard de l'orifice de passage selon un axe du dispositif destiné à être sensiblement vertical, la chemise et la cuvette définissant ensemble une chambre configurée pour recevoir le verre en fusion, l'unité comprenant un organe plongeur situé au moins en partie dans la chambre, et mobile en translation par rapport à la chemise selon l'axe pour pousser le verre en fusion présent dans la chambre à travers l'orifice de passage, et
- un organe de coupe pour couper le verre en fusion poussé à travers l'orifice de passage et former une des paraisons.

L'invention concerne également une installation de fabrication d'articles creux en verre intégrant un tel dispositif, et une méthode de distribution de paraisons correspondante, et un procédé de fabrication d'articles creux en verre mettant en oeuvre une telle méthode.

Un tel dispositif produit des paraisons. Une paraison est un morceau de verre en fusion, qui est ensuite transféré dans un moule ébaucheur dans lequel il est transformé en ébauche. L'ébauche est ensuite transférée dans un moule finisseur dans lequel elle est soufflée pour devenir l'article creux en verre souhaité.

La cuvette du dispositif est alimentée en verre en fusion en provenance d'un four. Afin d'obtenir des effets de coloration dans l'article en verre, il est connu de produire des paraisons colorées, en ajoutant dans la cuvette des matières colorantes qui s'incorporent dans le verre en fusion.

De telles matières colorantes sont par exemple des blocs de verre solide déjà coloré.

Toutefois, cette technique, bien que donnant satisfaction, provoque parfois des dépôts de matière s'opposant partiellement, voire totalement, au passage du verre en fusion.

Un but de l'invention est donc de résoudre, ou au moins de limiter, ces problèmes de colmatage dans le distributeur de paraisons.

A cet effet, l'invention a pour objet un dispositif tel que décrit ci-dessus, dans lequel l'unité comprend au moins un canal d'alimentation ménagé dans l'organe plongeur ou dans la chemise pour apporter une matière colorante directement dans le verre en fusion présent dans la chambre, et le dispositif comprend au moins une source de matière colorante pour alimenter le canal d'alimentation en matière colorante.

Selon des modes particuliers de réalisation, le dispositif comprend l'une ou plusieurs des caractéristiques suivantes, prises isolément ou selon toutes les combinaisons techniquement possibles :
- la matière colorante comprenant une fritte de verre broyée ;
- le canal d'alimentation est formé par une canalisation, de préférence en acier inoxydable ;
- la canalisation est formée par un ou plusieurs tubes, le ou les tubes ayant de préférence un diamètre interne compris entre 5 mm et 15 mm ;
- le canal d'alimentation définit au moins un orifice de sortie de la matière colorante, et l'orifice de sortie est situé à moins de 5 cm de l'orifice de passage au moins lorsque l'organe plongeur est dans une position proximale par rapport à l'orifice de passage ;
- l'organe plongeur possède un point le plus bas, et le canal d'alimentation définit un seul orifice de sortie, situé de préférence au point le plus bas ;
- le canal d'alimentation définit au moins deux orifices de sortie situé à une extrémité inférieure de l'organe plongeur, les deux orifices de sorties étant de préférence diamétralement opposés par rapport à l'axe ;
- l'unité comprend en outre un second canal d'alimentation ménagé dans l'organe plongeur ou dans la chemise pour apporter une matière colorante directement dans le verre en fusion présent dans la chambre, et le second canal d'alimentation est connecté à la source de matière colorante, ou bien le dispositif comprend au moins une seconde source de matière colorante pour alimenter le second canal d'alimentation ; et
- la chemise comporte une double paroi définissant un espace intermédiaire configuré pour recevoir le verre en fusion, le canal d'alimentation étant situé dans l'espace intermédiaire.

L'invention a également pour objet une installation de fabrication d'articles creux en verre comprenant :
- un dispositif pour produire des paraisons tel que décrit ci-dessus,
- au moins un moule ébaucheur configuré pour produire des ébauches à partir des paraisons, et
- au moins un moule finisseur configuré pour former les articles creux en verre à partir des ébauches.

L'invention concerne également une méthode de distribution de paraison destinées à la fabrication d'articles creux en verre par soufflage, comprenant les étapes suivantes :
- fourniture d'une cuvette adaptée pour contenir du verre en fusion, la cuvette définissant au moins un orifice de passage pour le verre en fusion,
- mise en mouvement du verre en fusion par une unité comportant une chemise située au-dessus et en regard de l'orifice de passage selon un axe destiné à être sensiblement vertical, la chemise et la cuvette définissant ensemble une chambre configurée pour recevoir le verre en fusion, l'unité comprenant un organe plongeur situé au moins en partie dans la chambre, et mobile en translation par rapport à la chemise selon l'axe,
- déplacement du verre en fusion présent dans la chambre à travers l'orifice de passage, le verre en fusion présent dans la chambre étant poussé par l'organe plongeur,
- coupe, par un organe de coupe, du verre en fusion passé à travers l'orifice de passage pour former une des paraisons,
- apport d'une matière colorante, directement dans le verre en fusion présent dans la chambre, par au moins un canal d'alimentation ménagé dans l'organe plongeur ou dans la chemise, et
- alimentation du canal d'alimentation en matière colorante par une source de matière colorante.

L'invention concerne enfin un procédé de fabrication d'articles creux en verre mettant en oeuvre une méthode pour obtenir des paraisons telle que décrite ci-dessus, le procédé comprenant en outre les étapes suivantes :
- production d'ébauches dans au moins un moule ébaucheur à partir des paraisons, et
- formation des articles creux en verre dans au moins un moule finisseur à partir des ébauches.

L'invention sera mieux comprise à la lecture de la description qui va suivre, donnée uniquement à titre d'exemple et faite en se référant aux dessins annexés sur lesquels :
- la figure 1 est un schéma d'une installation selon l'invention,
- la figure 2 est une vue d'un détail de la figure 1,
- les figures 3 à 5 sont des schémas de trois installations constituant des variantes de l'installation représentée sur la figure 1.

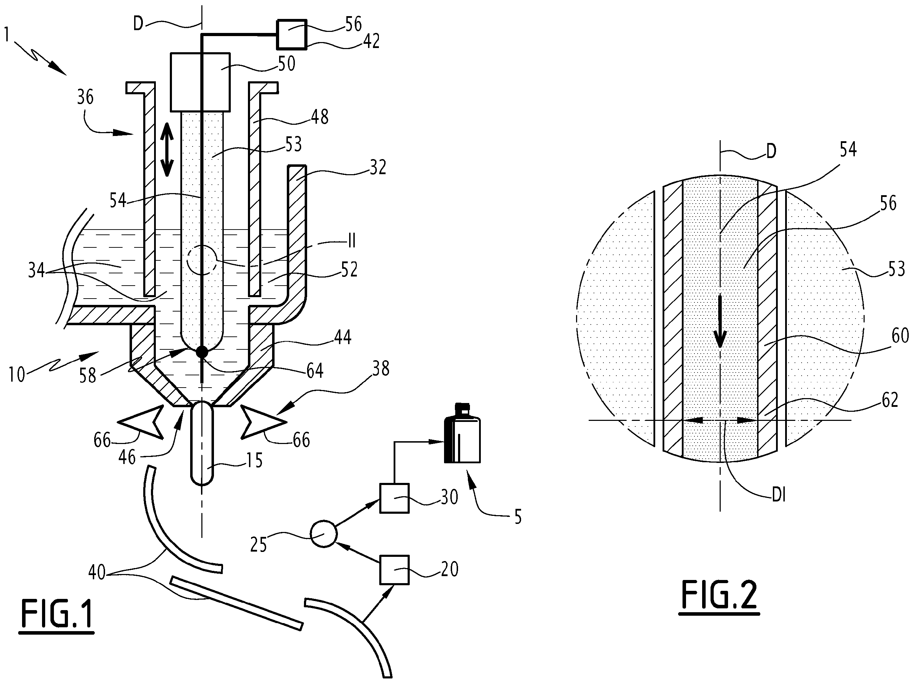

En référence aux figures 1 et 2, on décrit une installation 1 de fabrication d'articles creux en verre 5 selon l'invention.

Les articles 5 sont par exemple des bouteilles ou des flacons destinés au domaine cosmétique, notamment à la parfumerie.

L'installation 1 comprend un dispositif 10 distributeur de paraisons 15 (dont une seule est représentée sur la figure 1), un moule ébaucheur 20 pour former une ébauche 25 à partir d'une des paraisons 15, et un moule finisseur 30 pour former les articles 5 à partir des ébauches 25.

Le moule ébaucheur 20 et le moule finisseur 30 ne seront pas décrits en détail, car ce sont des éléments connus en eux-mêmes de l'homme du métier comme faisant partie des machines IS pour la fabrication des articles creux en verre.

Le dispositif 10 comporte une cuvette 32 (partiellement représentée) adaptée pour contenir du verre en fusion 34, une unité 36 de mise en mouvement du verre en fusion, un organe de coupe 38, et des éléments 40 de guidage des paraisons 15 vers le moule ébaucheur 20, et une source de matière colorante 42.

Le dispositif 10 est avantageusement relié à un four de verre (non représenté) qui l'alimente en verre en fusion 34.

La cuvette 32 comporte une rondelle 44 définissant un orifice de passage 46 pour le verre en fusion 34.

L'unité 36 de mise en mouvement du verre en fusion comporte une chemise 48 située au-dessus et en regard de l'orifice de passage 46 selon un axe D du dispositif 10 sensiblement vertical. L'unité 36 comprend aussi un organe plongeur 50 situé au moins en partie dans une chambre 52 définie par la chemise 48 et la cuvette 32.

La chemise 48, la cuvette 32 et l'organe plongeur 50 sont au moins en partie en matériau réfractaire adapté au contact avec le verre en fusion.

La chemise 48 présente par exemple une forme sensiblement tubulaire d'axe D.

L'organe plongeur 50 est mobile en translation par rapport à la chemise 48 selon l'axe D pour pousser le verre en fusion 34 présent dans la chambre 52 à travers l'orifice de passage 46. L'organe plongeur 16 comprend un corps 53 en matériau réfractaire et un canal d'alimentation 54 adapté pour apporter une matière colorante 56 en provenance de la source de matière colorante 42 directement dans le verre en fusion 34 présent dans la chambre 52.

L'organe plongeur 16 présente avantageusement une forme générale cylindrique s'étendant selon l'axe D. L'organe plongeur 50 comprend par exemple une extrémité inférieure 58 arrondie dans laquelle débouche le canal d'alimentation 54.

Le canal d'alimentation 54 débouche par exemple au centre de l'extrémité inférieure 58.

Le canal d'alimentation 54 est par exemple formé par une canalisation 60, avantageusement constituée par un tube 62 en acier inoxydable.

Le tube 62, dans l'exemple représenté, s'étend selon l'axe D, et présente avantageusement un diamètre interne DI compris entre 5 mm et 15 mm.

Le canal d'alimentation 54 définit un orifice de sortie 64 de la matière colorante 56, situé par exemple à moins de 5 cm de l'orifice de passage 46, au moins lorsque l'organe plongeur 50 est dans une position proximale par rapport à l'orifice de passage. Avantageusement, l'orifice de sortie 64 est situé à moins de 2 ou 3 cm de l'orifice de passage 46.

L'orifice de sortie 64 est avantageusement situé au point le plus bas de l'organe plongeur 50.

L'organe de coupe 38 est situé en-dessous de l'orifice de passage 46 et adapté pour couper le verre en fusion 34 qui s'écoule. L'organe de coupe 38 comprend par exemple des ciseaux 66.

Le fonctionnement de l'installation 1 va maintenant être brièvement décrit, car il se déduit de sa structure.

Le verre en fusion 34 arrive dans la cuvette 32 et pénètre dans la chambre 52 l'organe plongeur 50, par un mouvement de va-et-vient selon l'axe D par rapport à la cuvette 32, pousse le verre en fusion 34 à travers l'orifice de passage 46.

Concomitamment, le canal d'alimentation 54 relié à la source de matière colorante 42 apporte la matière colorante 56 directement dans le verre en fusion 34 présent dans la chambre 52. Ceci permet de colorer d'une façon particulière le verre en fusion présent à cet endroit.

Avantageusement, la canalisation 60 en acier permet un écoulement régulier de la matière colorante 56.

La matière colorante 56 est par exemple une fritte de verre coloré broyée.

Avantageusement, le dispositif 10 permet de faire varier la nature, la densité et le débit de la matière colorante 56.

L'organe de coupe 38 coupe le verre en fusion 34 en-dessous de l'orifice de passage 46 pour obtenir l'une des paraisons 15.

Chaque paraison 15 glisse le long des éléments de guidage 40 pour arriver dans le moule ébaucheur 20 où elle est transformée en l'ébauche 25, selon une étape connue en elle-même.

Enfin, l'ébauche 25 est transférée, par exemple par un bras articulé (non-représenté), dans le moule finisseur 30, où elle est soufflée en l'article creux en verre 5.

Grâce aux caractéristiques décrites ci-dessus, on évite une accumulation de matière colorante dans la cuvette 32, susceptible de s'opposer au passage du verre en fusion 34 vers l'orifice de passage 46.

En outre, l'arrivée de la matière colorante 56 dans le verre en fusion 34 par un orifice de sortie 64 relativement petit permet de colorer le verre en fusion d'une manière particulière permettant des effets de décoration nouveaux dans l'article creux en verre 5.

De plus, l'invention permet un contrôle plus aisé de la quantité de colorants introduits dans les paraisons 15.

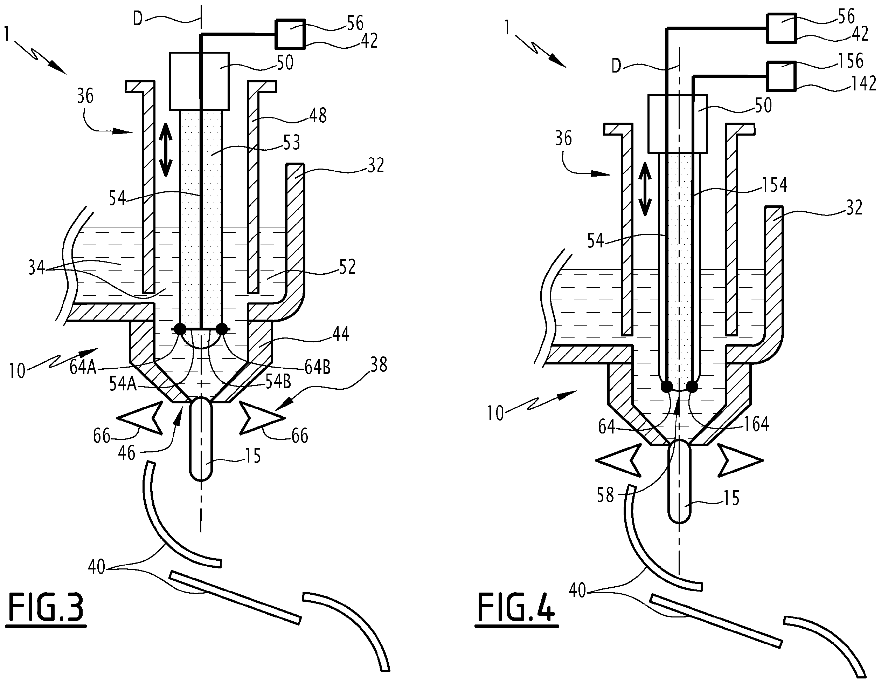

En référence à la figure 3, on décrit une première variante de l'installation 1, qui se distingue uniquement par la forme du canal d'alimentation 54.

En effet, dans la partie inférieure de l'organe plongeur 50, le canal 54 se divise en deux branches 54A, 54B qui débouchent dans la chambre 52 par deux orifices 64A, 64B permettant d'acheminer la matière colorante 56 en deux endroits distincts de l'organe plongeur 50.

Selon un mode de réalisation particulier, les orifices 64A, 64B sont diamétralement opposés par rapport à l'axe D.

Le fonctionnement de cette variante est analogue à celui déjà décrit.

Cette variante permet des effets de décoration particuliers, distincts de ceux permis par l'installation représentée sur la figure 1.

En référence à la figure 4, on décrit une deuxième variante, qui ne se distingue à nouveau de celle représentée sur les figures 1 et 3 que par la forme du canal d'alimentation 54, et la présence d'un deuxième canal d'alimentation 154.

Les canaux d'alimentation 54 et 154 sont avantageusement structurellement analogues l'un à l'autre.

Les canaux d'alimentation 54, 154 sont par exemple parallèles entre eux et forment deux orifices 64, 164 dans l'extrémité inférieure 58.

Les orifices 64, 164 sont par exemple symétriques l'un de l'autre par rapport à l'axe D.

Le deuxième canal d'alimentation 164 est relié à une deuxième source de matière colorante 142 adaptée pour délivrer une deuxième matière colorante 156, avantageusement distincte de la matière colorante 56.

Par exemple, la matière colorante 156 présente un aspect, notamment une couleur, différent de celui de la matière colorante 56 dans l'article creux en verre 5.

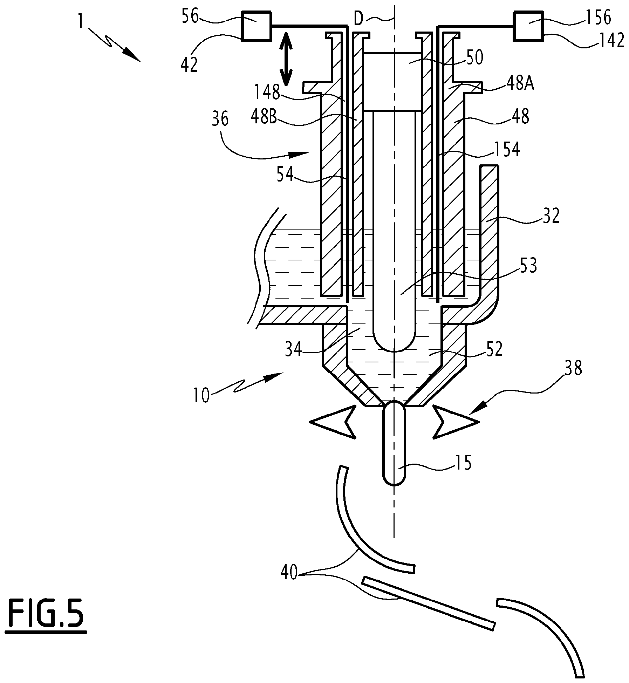

En référence à la figure 5, on décrit une troisième variante analogue aux précédentes, qui se distingue de celle représentée sur la figure 4 par le fait que la chemise 48 comporte deux parois 48A, 48B concentriques autour de l'axe D, et en ce que les canaux d'alimentation 54, 154 traversent selon l'axe D un espace intermédiaire 148 défini par les parois 48A, 48B.

L'espace intermédiaire 148 reçoit avantageusement une partie du verre en fusion 34.

Les canaux d'alimentation 54, 154 sont adaptés pour libérer les matières colorantes 56, 156 directement dans la chambre 52, légèrement à l'écart de l'organe plongeur 50.

Dans cette variante, les risques de colmatage sont également réduits et elle permet des effets de coloration spécifiques dans l'article creux en verre 5 obtenu *in fine.*

Il va de soi que les caractéristiques spécifiques des variantes décrites ci-dessus sont avantageusement combinables entre elles pour créer de nouvelles variantes de l'invention.

## Revendications

1. Dispositif (10) distributeur de paraisons (15) destinées à la fabrication d'articles (5) creux en verre par soufflage, le dispositif (10) comprenant :
- une cuvette (32) adaptée pour contenir du verre en fusion (34), la cuvette (32) définissant au moins un orifice de passage (46) pour le verre en fusion (34),
- une unité (36) de mise en mouvement du verre en fusion (34) comportant une chemise (48) située au-dessus et en regard de l'orifice de passage (46) selon un axe (D) du dispositif (10) destiné à être sensiblement vertical, la chemise (48) et la cuvette (32) définissant ensemble une chambre (52) configurée pour recevoir le verre en fusion (34), l'unité (36) comprenant un organe plongeur (50) situé au moins en partie dans la chambre (52), et mobile en translation par rapport à la chemise (48) selon l'axe (D) pour pousser le verre en fusion (34) présent dans la chambre (52) à travers l'orifice de passage (46), et
- un organe de coupe (38) pour couper le verre en fusion (34) poussé à travers l'orifice de passage (46) et former une des paraisons (15),
**caractérisé en ce que** :
- l'unité (36) comprend en outre au moins un canal d'alimentation (54) ménagé dans l'organe plongeur (50) ou dans la chemise (48) pour apporter une matière colorante (56, 156) directement dans le verre en fusion (34) présent dans la chambre (52), et
- le dispositif (10) comprend au moins une source de matière colorante (42) pour alimenter le canal d'alimentation (54) en matière colorante (56, 156).

2. Dispositif (10) selon la revendication 1, dans lequel la matière colorante (56, 156) comprend une fritte de verre broyée.

3. Dispositif (10) selon la revendication 1 ou 2, dans lequel le canal d'alimentation (54) est formé par une canalisation (60), de préférence en acier inoxydable.

4. Dispositif (10) selon la revendication 3, dans lequel la canalisation (60) est formée par un ou plusieurs tubes (62), le ou les tubes (62) ayant de préférence un diamètre interne (DI) compris entre 5 mm et 15 mm.

5. Dispositif (10) selon l'une quelconque des revendications 1 à 4, dans lequel le canal d'alimentation (54) définit au moins un orifice de sortie (64A, 64B) de la matière colorante (42), l'orifice de sortie (64A, 64B) étant situé à moins de 5 cm de l'orifice de passage (46) au moins lorsque l'organe plongeur est dans une position proximale par rapport à l'orifice de passage.

6. Dispositif (10) selon la revendication 5, dans lequel :
- l'organe plongeur (50) possède un point le plus bas, et
- le canal d'alimentation (54) définit un seul orifice de sortie (64), situé de préférence au point le plus bas.

7. Dispositif (10) selon la revendication 5, dans lequel le canal d'alimentation (54) définit au moins deux orifices de sortie (64, 64A, 64B, 164) situé à une extrémité inférieure (58) de l'organe plongeur (50), les deux orifices de sorties (64, 64A, 64B, 164) étant de préférence diamétralement opposés par rapport à l'axe (D).

8. Dispositif (10) selon l'une quelconque des revendications 1 à 7, dans lequel :
- l'unité (36) comprend en outre un second canal d'alimentation (154) ménagé dans l'organe plongeur (50) ou dans la chemise (48) pour apporter une matière colorante (42) directement dans le verre en fusion (34) présent dans la chambre (52), et
- le second canal d'alimentation (154) est connecté à la source de matière colorante (42), ou bien le dispositif (10) comprend au moins une seconde source de matière colorante (142) pour alimenter le second canal d'alimentation (154).

9. Dispositif (10) selon l'une quelconque des revendications 1 à 8, dans lequel la chemise (48) comporte une double paroi (48A, 48B) définissant un espace intermédiaire (148) configuré pour recevoir le verre en fusion (34), le canal d'alimentation (54) étant situé dans l'espace intermédiaire (148).

10. Installation (1) de fabrication d'articles (5) creux en verre comprenant :
- un dispositif (10) selon l'une quelconques des revendications 1 à 9 pour produire des paraisons (15),
- au moins un moule ébaucheur (20) configuré pour produire des ébauches (25) à partir des paraisons (15), et
- au moins un moule finisseur (30) configuré pour former les articles (15) creux en verre à partir des ébauches (25).

11. Méthode de distribution de paraisons (15) destinées à la fabrication d'articles (5) creux en verre par soufflage, comprenant les étapes suivantes :
- fourniture d'une cuvette (32) adaptée pour contenir du verre en fusion (34), la cuvette (32) définissant au moins un orifice de passage (46) pour le verre en fusion (34),
- mise en mouvement du verre en fusion (34) par une unité (36) comportant une chemise (48) située au-dessus et en regard de l'orifice de passage (46) selon un axe (D) destiné à être sensiblement vertical, la chemise (48) et la cuvette (32) définissant ensemble une chambre (52) configurée pour recevoir le verre en fusion (34), l'unité (36) comprenant un organe plongeur (50) situé au moins en partie dans la chambre (52), et mobile en translation par rapport à la chemise (48) selon l'axe (D),
- déplacement du verre en fusion (34) présent dans la chambre (52) à travers l'orifice de passage (46), le verre en fusion (34) présent dans la chambre (52) étant poussé par l'organe plongeur (50),
- coupe, par un organe de coupe (38), du verre en fusion (34) passé à travers l'orifice de passage (46) pour former une des paraisons (15),
- apport d'une matière colorante (56, 156), directement dans le verre en fusion (34) présent dans la chambre (52), par au moins un canal d'alimentation (54) ménagé dans l'organe plongeur (50) ou dans la chemise (48), et
- alimentation du canal d'alimentation (54) en matière colorante (42) par une source de matière colorante.

12. Procédé de fabrication d'articles (5) creux en verre mettant en oeuvre une méthode selon la revendication 11 pour obtenir des paraisons (15), le procédé comprenant en outre les étapes suivantes :
- production d'ébauches (25) dans au moins un moule ébaucheur (20) à partir des paraisons (15), et
- formation des articles (5) creux en verre dans au moins un moule finisseur (30) à partir des ébauches (25).
